(19) 

**Europäisches Patentamt**
**European Patent Office**
**Office européen des brevets**

(11) **EP 1 806 329 A2**

(12) **EUROPEAN PATENT APPLICATION**

(43) Date of publication:
**11.07.2007 Bulletin 2007/28**

(51) Int Cl.:
*C04B 37/00* (2006.01)   *C04B 28/24* (2006.01)

(21) Application number: **07000069.0**

(22) Date of filing: **03.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.01.2006 JP 2006000637**

(71) Applicants:
• **Asahi Glass Company, Limited**
  **Chiyoda-ku, Tokyo 100-8405 (JP)**
• **NGK INSULATORS, LTD.**
  **Nagoya-shi, Aichi 467-8530 (JP)**

(72) Inventors:
• **Miyakawa, Naomichi**
  **Asahi Glass Company, Limited**
  **100-8405 Tokyo (JP)**
• **Maeno, Hiroshi**
  **Asahi Glass Company, Limited**
  **100-8405 Tokyo (JP)**

(74) Representative: **Müller-Boré & Partner**
**Patentanwälte**
**Grafinger Strasse 2**
**81671 München (DE)**

(54) **Composition for ceramic bonding and ceramic bonded article**

(57)     The present invention provides a composition for ceramic bonding, which comprises 3-55% by volume of ceramic particles, 1-25% by volume of inorganic binder, and a liquid medium, wherein the composition further contains hollow particles. The invention also provides a ceramic bonded article comprising a ceramic bonding layer formed by applying the composition to a bonding surface of a ceramic molded body and then heating the composition applied.

EP 1 806 329 A2

## Description

The present invention relates to a composition for ceramic bonding and a ceramic bonded article having a ceramic bonding layer formed from the composition.

DPFS (diesel particulate filters) are used for cleaning exhaust gases discharged from the engines of motor vehicles, etc. Besides ceramic honeycomb filters (hereinafter abbreviated as filters) made of cordierite, which is an oxide ceramic, filters made of a non-oxide such as a silicon carbide or silicon nitride are used as the DPFs. Since soot and other substances contained in the exhaust gas accumulate in this kind of filter during use thereof, there is an unavoidable problem that the amount of the deposit increases with the lapse of driving time and the pressure loss of the filter increases accordingly. A known technique for returning the increased pressure loss to an initial value to improve the filter efficiency is to burn the soot and the like, for example, by elevating the temperature of the exhaust gas (e.g., to 500-1,000°C) and to thereby regenerate the filter. However, in the case where this filter is a large filter composed of one ceramic molded body, the soot combustion for regeneration results in an increased thermal stress. There has hence been a problem that repetitions of such a high-temperature treatment are apt to cause a thermal shock and the molded body cracks and becomes unusable as a filter.

A ceramic bonded article comprising a plurality of ceramic molded bodies bonded together through a bonding layer made of a ceramic material has been proposed as a filter capable of withstanding the thermal stress caused in regeneration. An example of such ceramic bonded articles is proposed in, e.g., patent document 1. This ceramic bonded article comprises a plurality of porous ceramic molded bodies bonded together through a bonding layer. This bonding layer is required to have the property of relieving the thermal stress. A technique which has been employed for attaining that property is to incorporate inorganic fibers into a composition to thereby form a bonding layer having a reduced modulus of elasticity and relieving the thermal stress, as shown in patent documents 2 to 4. However, there has been a problem that even when this technique is used for forming a bonding layer having a reduced modulus of elasticity, the reduction in modulus of elasticity attained by this technique has a limitation.

Furthermore, even the bonding layer described above suffers a kind of sintering when exposed for a prolonged time period to a high temperature such as those at which DPFs are used, and bonding among the ceramic particles contained in the bonding layer or between the ceramic particles and the inorganic fibers is enhanced disadvantageously. This results in a problem that the bonding layer increases in modulus of elasticity during use and the filter is reduced in thermal stress resistance and breaks. Especially in recent years, there is a strong desire for a reduction in filter pressure loss from the standpoint of fuel consumption reduction. Because of this, there is a growing desire for a higher porosity in filters. However, there has been a possibility that ceramic molded bodies having a high porosity might break before the bonding layer breaks, because these ceramic molded bodies have a low modulus of elasticity. No bonding layer having a lower modulus of elasticity than ceramic molded bodies and having moderate bonding strength and material strength and no composition for forming a bonding layer having these properties have been found so far.

A ceramic bonded article comprising a plurality of ceramic molded bodies bonded together through a bonding layer has higher thermal stress resistance than filters each composed of one ceramic molded body. However, the bonding layer part does not contribute to the filtering function inherent in the filter. Consequently, such ceramic bonded articles have a problem that the total mass per DPF is larger as compared with filters each composed of one ceramic molded body. In addition, they further have problems, for example, that regeneration requires much time and necessitates a large amount of energy. Consequently, to reduce the mass of the bonding layer per DPF is coming to be a subject in recent years.

Patent Document 1: JP-A-2002-102627 (Claims)
Patent Document 2: Japanese Patent No. 3121497 (Claims)
Patent Document 3: JP-A-2003-155908 (Claims)
Patent Document 4: JP-A-2001-190916 (Claims)

An object of the invention is to provide a composition for forming a bonding layer having a low modulus of elasticity and high thermal-shock resistance when an exhaust gas purification filter is to be obtained by bonding ceramic molded main bodies. Another object of the invention is to provide a ceramic bonding layer formed from the composition and a ceramic bonded article having the ceramic bonding layer.

Other objects and effects of the invention will become apparent from the following description.

The invention provides the following.

[1] A composition for ceramic bonding, which comprises 3-55% by volume of ceramic particles, 1-25% by volume of inorganic binder, and a liquid medium, wherein the composition further contains hollow particles.

[2] The composition for ceramic bonding according to [1] above, wherein the hollow particles comprise organic hollow particles and/or inorganic hollow particles.

[3] The composition for ceramic bonding according to [1] or [2] above, wherein the hollow particles have an average particle diameter of 5-300 $\mu$m.

[4] The composition for ceramic bonding according to any one of [1] to [3] above, wherein the hollow particles have a specific gravity of 0.005-1.5.

[5] The composition for ceramic bonding according to any one of [1] to [4] above, wherein the proportion of the total volume of the hollow particles to the total volume of all solid ingredients in the composition is 5-90%.

[6] A ceramic bonded article comprising a ceramic bonding layer formed by applying the composition for ceramic bonding according to any one of [1] to [5] above to a bonding surface of a ceramic molded body and then heating the composition applied.

[7] The ceramic bonded article according to [6] above, wherein the ceramic bonding layer has a porosity of 30-90%.

[8] The ceramic bonded article according to [6] or [7] above, wherein the proportion of the closed pores in the ceramic bonding layer to the total volume of all pores in the layer is 5% by volume or higher.

According to the invention, a bonding layer having a low modulus of elasticity and high thermal-shock resistance is obtained. The composition is hence suitable for use in obtaining a ceramic bonded article capable of withstanding long-term use as a DPF.

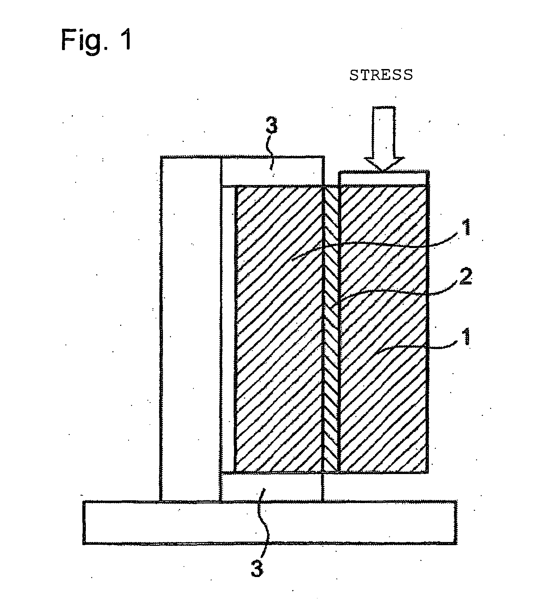

Fig. 1 is a view illustrating a method of measuring the bonding strength of a ceramic bonded article obtained according to the invention.

The reference numerals used in the drawing denotes the followings, respectively.

1: Ceramic molded body

2: Ceramic bonding layer

3: Holding member

The composition for ceramic bonding of the invention (hereinafter referred to as "composition of the invention") contains ceramic particles as an essential ingredient. The ceramic particles are not particularly limited as long as they have sufficient heat resistance at filter use temperatures. However, it is preferred that the ceramic particles be made of a material which is of the same kind as or similar in property to the ceramic molded bodies to be bonded, because use of such ceramic particles brings about high thermal-shock resistance. Examples thereof include oxides such as cordierite, aluminum titanate, aluminum silicate represented by mullite, and lithium aluminum silicate and non-oxide ceramics such as silicon carbide, silicon nitride, and boron nitride.

The shape of the ceramic particles is not particularly limited. However, from the standpoint of maintaining the strength of the bonding layer, it is preferred to use nearly spherical solid particles. For the purpose of reducing the modulus of elasticity of the bonding layer, inorganic fibers such as alumina-silica glass fibers or flaky particles such as diatomaceous earth may be added as ceramic particles to the composition of the invention.

The composition of the invention further contains an inorganic binder. This inorganic binder not only serves as an adhesive for bonding the ceramic particles to one another when the composition of the invention is applied to a bonding surface of a ceramic molded body and heated to form a ceramic bonding layer (hereinafter often referred to simply as "bonding layer"), but also can retain excellent adhesiveness during high-temperature use. Preferred examples of the inorganic binder include colloidal sols such as silica sol and alumina sol. Besides these, clay minerals such as sepiolite may be used.

When applied to a bonding surface of a ceramic molded body, the composition of the invention is used as a flowable composition. For preparing the flowable composition, a liquid medium is used in the invention besides the ceramic particles and the inorganic binder. Preferred as the liquid medium is water or any of various organic solvents (in which neither the ceramic particles nor the hollow particles which will be described later dissolve).

As a result of intensive investigations made by the present inventors, it was found that the modulus of elasticity of a bonding layer can be effectively reduced without impairing the strength properties of the layer, by incorporating hollow particles into the composition containing ceramic particles and an inorganic binder. The invention has been thus achieved. Although to disperse air (pores), which has a modulus of elasticity of 0, in a bonding layer is essentially most effective in reducing the modulus of elasticity of the bonding layer, there is a problem that it is difficult to uniformly disperse pores in a bonding layer in a constant amount. In the invention, this problem is eliminated by using hollow particles. The addition of hollow particles further produces an effect that the overall mass of the bonded object comprising a plurality of ceramic molded bodies bonded together through the adhesive layer (hereinafter often referred to simply as "bonded object") per DPF can be reduced.

The hollow particles to be used preferably are organic hollow particles and/or inorganic hollow particles. When organic hollow particles are used, pores can be uniformly dispersed in the bonding layer in a constant amount because the organic hollow particles decompose and uniformly scatter upon heating. On the other hand, the use of inorganic hollow particles has advantages that the hollows as they are can be utilized as pores and that a component of the inorganic hollow particles gasifies upon heating to thereby uniformly form pores in the bonding layer in a constant amount. Furthermore, inorganic hollow particles function like a sintering agent for other ceramic particles to impart strength to the bonding layer. Because of these, when inorganic hollow particles are used, the effect of reducing the modulus of elasticity of the bonding layer while sufficiently maintaining the bonding strength of the layer is apt to be obtained.

Examples of the material of the organic hollow particles include general organic polymers such as acrylic resins, acrylonitrile resins, vinyl acetate resins, and phenolic resins. It is preferred to use ones which do not leave a residue after pyrolysis. The inorganic hollow particles to be used preferably are ceramic particles which neither alter in a use temperature range nor react with other components of the composition of the invention. It is preferred to use alumina-silica glass balloons or the like. As the inorganic hollow particles may be used inorganic hollow particles capable of bonding the ceramic particles to one another.

As long as those hollow particles are hollow, the parts corresponding to the shells may be either dense or porous. Although the hollows preferably are present in the form of closed cells, they may comprise both of open cells and closed cells. The outer shape of the hollow particles is not particularly limited. However, a spherical outer shape is preferred because such hollow particles are apt to be uniformly mixed with other particles during mixing and are easily available. In addition, there is an advantage that the shape of the pores formed with spherical hollow particles in the bonding layer also is apt to be spherical and, hence, it is easy to inhibit strength from decreasing with increasing porosity.

The average particle diameter of the hollow particles is preferably 5-300 $\mu$m. Average particle diameters thereof smaller than 5 $\mu$m are undesirable because the addition of such hollow particles is less apt to produce the effect of reducing the modulus of elasticity. On the other hand, average particle diameters thereof exceeding 300 $\mu$m are undesirable because there is a possibility that the strength of the bonding layer might be considerably low even when the amount of such hollow particles added is small. More preferably, the average particle diameter thereof is in the range of 10-150 $\mu$m.

The specific gravity of the hollow particles is preferably 0.005-1.5. Use of hollow particles having a specific gravity lower than 0.005 is effective because a large reduction in modulus of elasticity can be attained by adding the hollow particles only in a slight amount. However, there is a possibility that such hollow particles might break during mixing with the ceramic particles to impair the effect of the addition of hollow particles, because the lower the specific gravity of hollow particles, the thinner the shell parts of the particles. Because of these, hollow particles having a specific gravity lower than 0.005 show poor handleability in preparing the composition of the invention and are hence not undesirable. On the other hand, in case where the specific gravity thereof exceeds 1.5, the thickness of the shell part which forms the hollow particles becomes relatively thicker undesirably. Accordingly, when inorganic hollow particles are employed, the glass ingredient increases and this might excessively enhance the sintering agent-like function and also might weaken the effect of decreasing the modulus of elasticity because of the increased strength of the shell part. On the other hand, when organic hollow particles are employed and added in a large amount, it is essential to conduct a step for removing a resinous ingredient after application of the composition of the invention. In this case, not only the steps are complicated but also there is a possibility that the presence of a large amount of the resinous ingredient might cause bonding layer shrinkage, etc. A more preferred range of the specific gravity thereof is 0.01-1.0.

In the composition of the invention, the proportion of the total volume of the hollow particles to the total volume of all solid ingredients which are the ceramic particles, the inorganic binder, and all solid ingredients optionally added is preferably 5-90%. Especially preferably, the proportion thereof to the total volume of the ceramic particles and the inorganic binder is regulated to 5-90%. The term "volume of a hollow particle" herein means the volume of both the shell and the whole part surrounded by the shell (i.e., the sum of the volume of the shell part and the volume of the hollow part). In case where the proportion of the total volume of the hollow particles is lower than the lower limit, it is difficult to sufficiently reduce the modulus of elasticity. In case where the proportion of the total volume of the hollow particles exceeds 90%, there is a possibility that the material strength and bonding strength of the bonding layer itself might decrease unavoidably. The proportion thereof is more preferably in the range of 10-85%.

Likewise, the proportion of the total mass of the hollow particles to the total mass of all solid ingredients in the composition of the invention is preferably 0.1-50% by mass. In case where the proportion of the total mass of the hollow particles is lower than the lower limit, it is difficult to sufficiently reduce the modulus of elasticity. In case where the proportion of the total mass of the hollow particles exceeds 50%, there is a possibility that the material strength and bonding strength of the bonding layer itself might decrease unavoidably. The proportion thereof is more preferably in the range of 0.2-30%.

A dispersant and a thickener may be added to the composition of the invention in order to uniformly disperse solid ingredients including the ceramic particles, inorganic binder, and hollow particles in the liquid medium. Examples of the dispersant include homopolymers of monomers having a carboxy group, such as acrylic acid, methacrylic acid, and maleic acid, and homopolymers having the same structures as those polymers except that the carboxy group parts have been converted to a salt, e.g., ammonium salt. Also preferred are copolymers of a monomer having a carboxy group and a monomer having a carboxylic acid salt group and copolymers of a monomer having a carboxylic acid salt group and a carboxylic acid derivative, e.g., an alkyl ester. As the thickener can be advantageously used either of an organic thickener (e.g., methyl cellulose, polyethylene glycol, poly(vinyl alcohol), or poly(vinyl acetate)) and an inorganic thickener (e.g., bentonite).

The composition of the invention comprises 3-55% by volume of ceramic particles, 1-25% by volume of inorganic binder, and a liquid medium. Contents of the ceramic particles lower than 3% by volume are undesirable because there is a possibility that after application of the composition, the coating layer might abruptly shrinks and cracks in a heating step, resulting in a considerably reduced bonding strength. On the other hand, contents thereof exceeding 55% by volume are undesirable because there is a possibility that such too high ceramic-particle contents might impair the flowability of the composition for bonding. In case where the content of the inorganic binder is lower than 1% by volume, there is a possibility that the property of bonding the ceramic particles to one another cannot be sufficiently obtained. On the other hand, in case where the content thereof exceeds 25% by volume, there is a possibility that the bonding layer might tenaciously bond and shrink when the filter is exposed to high temperatures, resulting in breakage of the ceramic molded bodies. The content of the ceramic particles in the composition of the invention is more preferably 5-50% by volume. The content of the inorganic binder in the composition of the invention is more preferably 3-20% by volume.

The content of the liquid medium in the composition of the invention is not particularly limited. However, the content thereof is preferably 20-96% by volume. By regulating the content of the liquid medium to 20% by volume or higher, the composition can be made to retain flowability and give a homogeneous bonding layer. On the other hand, by regulating the content thereof to 96% by volume or lower, the composition of the invention can be made to have a high concentration. As a result, it is easy to obtain a bonding layer having a desired thickness through one process comprising applying and heating the composition of the invention. The content of the liquid medium in the composition of the invention is more preferably 25-70% by volume.

The materials described above are mixed by a common method to prepare the composition of the invention and the following steps A to C, for example, are then successively conducted, whereby a ceramic bonded article comprising two ceramic molded bodies and a ceramic bonding layer sandwiched between these can be obtained through a simple procedure.

Step A: A step in which the composition of the invention is applied to a bonding surface of a ceramic molded body to obtain a coating layer.

Step B: A step in which another ceramic molded body is superposed on that ceramic molded body so that the bonding surface thereof overlies the coating layer to thereby obtain an assemblage.

Step C: A step in which the assemblage is heated at 100-800°C.

The heating temperature in step C is suitably regulated according to properties of the bonded object to be obtained. However, in the case where the hollow particles used are organic hollow particles, it is preferred to heat the assemblage at a temperature higher than the decomposition temperature of the organic polymer constituting the organic hollow particles.

From the standpoints of strength, heat resistance, etc., the material of the ceramic molded bodies preferably is one which comprises as main crystals any member selected from the group consisting of oxides such as cordierite, aluminum titanate, aluminum silicate represented by mullite, and lithium aluminum silicate and non-oxide ceramics such as silicon carbide and silicon nitride. It is preferred that the periphery of the bonded object thus obtained be processed, preferably, the peripheral wall thereof be coated with a paste of the same kind as the composition of the invention, before the bonded object is used as an exhaust gas purification filter.

The porosity of the bonding layer obtained according to the invention (hereinafter referred to also as overall porosity) is preferably 30-90%. Porosities thereof lower than 30% are undesirable because there is a possibility that the modulus of elasticity cannot be sufficiently reduced. On the other hand, porosities thereof exceeding 90% are undesirable because such a bonding layer itself is brittle and there is a possibility that the filter might break at the bonding part during use due to, e.g., vibrations of the motor vehicle. The porosity of the bonding layer is more preferably 35-85%.

When the proportion by volume of the closed pores in the bonding layer to the total volume of all pores in the layer (hereinafter referred to as "closed-pore proportion") is 5% or higher, the modulus of elasticity can be effectively reduced and the strength can be inhibited from decreasing because the proportion of open pores, at which stresses are apt to concentrate when a stress is imposed on the bonding layer, is low. Closed-pore proportions of 5% and higher are hence preferred. When the closed-pore proportion is lower than 5%, this bonding layer can be almost equal in modulus of elasticity-reducing effect to bonding layers having the same porosity and having closed-pore proportions not lower than 5%. However, there is a possibility that when a stress is imposed on this bonding layer and stress concentration occurs at open pores, then the bonding layer might readily break and the material of the bonding layer might partly penetrate into pores of the ceramic molded bodies. The closed-pore proportion is preferably 10% or higher, more preferably 15% or higher.

EXAMPLES

The present invention will be illustrated in greater detail with reference to the following Invention Examples (Examples 1 to 12) and Comparative Examples (Examples 13 to 15), but the invention should not be construed as being limited thereto.

(1) Preparation of Compositions for Ceramic Bonding:

The following ingredients were mixed according to the proportions shown in Tables 1 to 3. Ion-exchanged water was added to each of the mixtures in an amount of 40% by volume per 60% by volume the whole mixture. The resultant mixtures each were homogenized with a commercial mixer to prepare paste-form compositions for ceramic bonding.

In Tables 1 to 3, all of the units of the amounts of silicon nitride powder, silicon carbide powder, inorganic hollow particles, inorganic fibers, inorganic binder, organic hollow particles, and thickener and of the total volume of all solid ingredients are % by volume. Furthermore, the content of hollow particles in Tables 1 to 3 means each of the proportion of the total volume of the hollow particles to the total volume of all solid ingredients (% by volume) and the proportion of the total mass of the hollow particles to the total mass of all solid ingredients (% by mass).

Silicon nitride powder: silicon nitride powder having a specific gravity of 3.19 and an average particle diameter of 2 $\mu$m (trade name, SN-B; manufactured by Denki Kagaku Kogyo Kabushiki Kaisha).

Silicon carbide powder: silicon carbide powder having a specific gravity of 3.21 and an average particle diameter of 2.3 $\mu$m (trade name, 6S; manufactured by Taiheiyo Rundum Corp.).

Inorganic hollow particles: hollow spherical particles of silica-alumina glass which have a specific gravity of 0.6 and an average particle diameter of 45 $\mu$m (trade name, SL75; manufactured by Taiheiyo Cement Corp.).

Inorganic fibers: alumina-silica glass fibers having a specific gravity of 3.0, average fiber diameter of about 10 $\mu$m, and average fiber length of about 50 $\mu$m (trade name, HMS; manufactured by Saint-Gobain TM K.K.).

Inorganic binder: colloidal silica having a solid concentration of 40% by mass (trade name, Snowtex N-40; manufactured by Nissan Chemical Industries, Ltd.).

Organic hollow particles: hollow spherical particles of acrylonitrile resin which have a resin concentration of 14% by mass, specific gravity of 0.02, and average particle diameter of 40 $\mu$m (trade name, F-50E; manufactured by Matsumoto Yushi-Seiyaku Co., Ltd.).

Thickener: bentonite having a specific gravity of 2.5 (trade name, Kunipia F; manufactured by Kunimine Industries Co., Ltd.).

(2) Formation of Bonding Layer:

Each of the compositions for ceramic bonding obtained above was applied to one side of a prismatic ceramic molded body (crystal phase, $\beta$-form $Si_3N_4$; average pore diameter, 20 $\mu$m; porosity, 65%; cell thickness, 0.3 mm; cell pitch, 1.5 mm) having dimensions of 56 mm by 56 mm by 152.4 mm (length) and dried at 200°C to obtain a bonding layer having a thickness of 2 mm.

(3) Evaluation of Bonding Layer:

(3-1) Overall Porosity and Closed-Pore Proportion:

The bonding layer of Example 13, which had been formed without adding any hollow particles, was examined for apparent density $\rho_0$ (g/cm$^3$) and bulk density $\rho_1$ (g/cm$^3$) by the Archimedes method. Subsequently, a rectangular sample having a thickness of 1 mm, width of 10 mm, and length of 60 mm was cut out of each of the bonding layers formed from the compositions containing hollow particles (Examples 1 to 12). Each sample was examined for mass W (g), and the overall porosity $P_0$ (%) and the closed-pore proportion $P_1$ (%) were calculated using the following equations 1 and 2.

$$\text{Sample volume } V_0 = 1 \times 10 \times 60 / 1000$$

$$\text{Volume of material constituting the bonding layer } V_1 = W / \rho_0$$

$$\text{Volume of open pores } V_2 = (\rho_0 - \rho_1) / \rho_1 \times V_1$$

$$\text{Volume of all pores } V_3 = V_0 - V_1$$

$$\text{Volume of closed pores } V_4 = V_3 - V_2$$

$$P_0 = V_3/V_0 \qquad\qquad \text{(equation 1)}$$

$$P_1 = V_4/V_0 \qquad\qquad \text{(equation 2)}$$

(3-2) Bending Strength and Young's Modulus of Bonding Layer:
Autograph (product name, AGS-J; manufactured by Shimadzu Corp.) was used to apply loads to each of the rectangular samples having a thickness of 1 mm, width of 10 mm, and length of 60 mm under the conditions of a span of 40 mm and a head speed of 0.5 mm/sec. The bending strength was calculated from the maximum load, and the Young's modulus, as a measure of the modulus of elasticity of the bonding layer, was calculated from the relationship between load and displacement.

(3-3) Bonding Strength:

The method of measuring bonding strength is explained below by reference to Fig. 1.
Each of the ceramic-bonding compositions of Examples 1 to 15 was applied to one side of the same ceramic molded body 1 as that used in (2) above to thereby form a coating layer. Another ceramic molded body 1 was superposed on the resultant coating layer so that the two ceramic molded bodies 1 were nearly parallel to each other. This assemblage was dried at 200°C to obtain a ceramic bonded article A having a ceramic bonding layer 2 having a thickness of 2 mm.
Both ends of one of the ceramic molded bodies 1 constituting the bonded object A obtained were held with holding members 3. Thereafter, a load was vertically applied on the upper part of the other ceramic molded body 1 (not held with the holding members 3). The shearing stress was determined by dividing the resulting maximum load by the bonding area (56 mm x 152.4 mm). This was taken as the bonding strength between the bonding layer and each ceramic molded body.
The values of overall porosity (%), closed-pore proportion (%), bending strength (MPa) and Young's modulus (GPa) of the bonding layer, and bonding strength (kPa) obtained by the methods are shown in Table 1 (Examples 1 to 5), Table 2 (Examples 6 to 10), and Table 3 (Examples 11 to 15).
Table 1

|  | Example 1 | Example 2 | Example 3 | Example 4 | Example 5 |
|---|---|---|---|---|---|
| Ceramic particles |  |  |  |  |  |
|     Silicon nitride powder | - | - | - | - | - |
|     Silicon carbide powder | 30 | 25 | 12 | 9 | 19 |
|     Inorganic hollow particles | - | - | - | - | 19 |
|     Inorganic fibers | 29 | 23 | 12 | 9 | 38 |
| Inorganic binder | 18 | 15 | 7 | 5 | 23 |
| Organic hollow particles | 22 | 36 | 67 | 76 | - |
| Thickener | 1 | 1 | 1 | 1 | 1 |
| Total volume of all solid ingredients | 100 | 100 | 100 | 100 | 100 |
| Content of hollow particles (% by volume) | 22 | 36 | 67 | 76 | 19 |

(continued)

|  | Example 1 | Example 2 | Example 3 | Example 4 | Example 5 |
|---|---|---|---|---|---|
| (% by mass) | 0.2 | 0.4 | 1.5 | 2.3 | 5.4 |
| Overall porosity | 42 | 59 | 65 | 73 | 60 |
| Closed-pore proportion | 24 | 46 | 52 | 65 | 49 |
| Bending strength | 5.1 | 3.4 | 2.3 | 1.3 | 3.0 |
| Young's modulus | 5.8 | 3.0 | 1.7 | 0.4 | 2.5 |
| Bonding strength | 500 | 350 | 422 | 430 | 350 |

Table 2

|  | Example 6 | Example 7 | Example 8 | Example 9 | Example 10 |
|---|---|---|---|---|---|
| Ceramic particles | | | | | |
|    Silicon nitride powder | - | 32 | 20 | 10 | 10 |
|    Silicon carbide powder | 19 | - | - | 10 | - |
|    Inorganic hollow particles | 10 | - | 60 | 60 | 33 |
|    Inorganic fibers | 38 | 28 | 12 | 11 | 10 |
| Inorganic binder | 23 | 19 | 8 | 8 | 6 |
| Organic hollow particles | 9 | 20 | - | - | 40 |
| Thickener | 1 | 1 | - | 1 | 1 |
| Total volume of all solid ingredients | 100 | 100 | 100 | 100 | 100 |
| Content of hollow particles | | | | | |
|    (% by volume) | 19 | 20 | 60 | 60 | 73 |
|    (% by mass) | 3.0 | 0.2 | 25.0 | 25.1 | 22.6 |
| Overall porosity | 58 | 40 | 65 | 60 | 70 |
| Closed-pore proportion | 48 | 21 | 48 | 50 | 60 |
| Bending strength | 3.0 | 8.0 | 2.5 | 3.0 | 1.5 |
| Young's modulus | 2.6 | 5.0 | 2.0 | 3.5 | 0.4 |
| Bonding strength | 330 | 650 | 400 | 400 | 350 |

Table 3

|  | Example 11 | Example 12 | Example 13 | Example 14 | Example 15 |
|---|---|---|---|---|---|
| Ceramic particles | | | | | |
|    Silicon nitride powder | - | 63 | - | 35 | 78 |
|    Silicon carbide powder | 63 | - | 38 | - | - |
|    Inorganic hollow particles | 14 | 14 | - | - | - |
|    Inorganic fibers | - | - | 38 | 43 | - |
| Inorganic binder | 17 | 17 | 23 | 21 | 21 |
| Organic hollow particles | 5 | 5 | - | - | - |
| Thickener | 1 | 1 | 1 | 1 | 1 |
| Total volume of all solid ingredients | 100 | 100 | 100 | 100 | 100 |

(continued)

| | Example 11 | Example 12 | Example 13 | Example 14 | Example 15 |
|---|---|---|---|---|---|
| Content of hollow particles (% by volume) (% by mass) | 19 3.7 | 19 3.7 | - - | - - | - - |
| Overall porosity | 44 | 46 | 23 | 20 | 25 |
| Closed-pore proportion | 25 | 30 | 0 | 0 | 0 |
| Bending strength | 6.0 | 5.0 | 9.0 | 12.0 | 6.0 |
| Young's modulus | 8.0 | 5.0 | 12.0 | 9.0 | 17.0 |
| Bonding strength | 500 | 360 | 600 | 650 | 600 |

It can be seen from Tables 1 to 3 that by using the compositions for ceramic bonding according to the invention, bonding layers having a considerably reduced modulus of elasticity could be formed without impairing the bonding strength between each bonding layer and the ceramic molded bodies. Namely, a ceramic bonding layer having excellent thermal-shock resistance and a ceramic bonded article having this bonding layer are obtained by using the composition for ceramic bonding of the invention.

The invention can be advantageously applied to the bonding of ceramic molded bodies in obtaining a DPF.

While the present invention has been described in detail and with reference to specific embodiments thereof, it will be apparent to one skilled in the art that various changes and modifications can be made therein without departing from the spirit and scope thereof.

This application is based on Japanese Patent Application No. 2006-000637 filed January 5, 2006, and the contents thereof is herein incorporated by reference.

## Claims

1. A composition for ceramic bonding, which comprises 3-55% by volume of ceramic particles, 1-25% by volume of inorganic binder, and a liquid medium, wherein the composition further contains hollow particles.

2. The composition for ceramic bonding according to claim 1, wherein the hollow particles comprise organic hollow particles and/or inorganic hollow particles.

3. The composition for ceramic bonding according to claim 1 or 2, wherein the hollow particles have an average particle diameter of 5-300 $\mu$m.

4. The composition for ceramic bonding according to any one of claims 1 to 3, wherein the hollow particles have a specific gravity of 0.005-1.5.

5. The composition for ceramic bonding according to any one of claims 1 to 4, wherein the proportion of the total volume of the hollow particles to the total volume of all solid ingredients in the composition is 5-90%.

6. A ceramic bonded article comprising a ceramic bonding layer formed by applying the composition for ceramic bonding according to any one of claims 1 to 5 to a bonding surface of a ceramic molded body and then heating the composition applied.

7. The ceramic bonded article according to claim 6, wherein the ceramic bonding layer has a porosity of 30-90%.

8. The ceramic bonded article according to claim 6 or 7, wherein the proportion of the closed pores in the ceramic bonding layer to the total volume of all pores in the layer is 5% by volume or higher.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002102627 A
- JP 3121497 B
- JP 2003155908 A
- JP 2001190916 A
- JP 2006000637 A